(19) Europäisches Patentamt
European Patent Office
Office européen des brevets

(11) **EP 4 390 384 A1**

(12) **DEMANDE DE BREVET EUROPEEN**

(43) Date de publication:
**26.06.2024 Bulletin 2024/26**

(21) Numéro de dépôt: **23218755.9**

(22) Date de dépôt: **20.12.2023**

(51) Classification Internationale des Brevets (IPC):
**G01N 27/30** (2006.01)     **G01N 27/327** (2006.01)
**G01N 27/416** (2006.01)

(52) Classification Coopérative des Brevets (CPC):
**G01N 27/302; G01N 27/4167**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **22.12.2022 FR 2214295**

(71) Demandeur: **Commissariat à l'énergie atomique et aux énergies alternatives
75015 Paris (FR)**

(72) Inventeurs:
• **THOMAS, Yohann**
**38054 GRENOBLE Cedex 09 (FR)**
• **CHATARD, Charles**
**38054 GRENOBLE Cedex 09 (FR)**
• **GOUGIS, Maxime**
**38054 GRENOBLE CEDEX 09 (FR)**

(74) Mandataire: **Brevalex
Tour Trinity
1 B Place de la Défense
92400 Courbevoie (FR)**

(54) **ÉLECTRODE SENSIBLE AU PH, SON PROCÉDÉ DE PRÉPARATION ET SES UTILISATIONS**

(57)     La présente invention concerne une électrode sensible aux pH (10) comprenant : (i) une couche conductrice (12) disposée sur un support isolant (11) et (ii) une couche sensible au pH (13) disposée sur la couche conductrice (12), ladite couche sensible au pH comprenant un transducteur électrochimique et des éléments sensibles au pH répartis dans cette couche sensible au pH, lesdits éléments sensibles au pH étant choisis dans le groupe constitué par les oxydes de métaux de transition et les molécules redox sensibles au pH. La présente invention concerne également un capteur pH tout solide comprenant une telle électrode et leurs utilisations pour mesurer le pH dans un milieu liquide.

Fig. 2

EP 4 390 384 A1

**Description**

**DOMAINE TECHNIQUE**

La présente invention appartient au domaine des capteurs électrochimiques utiles pour la détermination de paramètres chimiques, notamment au domaine des capteurs de pH et, en particulier, au domaine des capteurs pH tout solide.

La présente invention propose une électrode sensible au pH notamment utile pour un capteur pH tout solide dans laquelle le transducteur électrochimique et les éléments sensibles au pH sont combinés dans une seule et même couche.

La présente invention concerne également un procédé de préparation d'une telle électrode sensible au pH ainsi qu'un capteur pH tout solide comprenant une telle électrode et ses différentes utilisations.

**ÉTAT DE LA TECHNIQUE ANTÉRIEURE**

Le potentiel hydrogène communément noté « pH » correspond à la mesure, en solution, de l'activité chimique des ions hydrogène. Il s'agit de l'un des paramètres chimiques les plus importants pour la surveillance des processus chimiques et biologiques. Il est couramment utilisé, par exemple, dans le domaine médical, dans le domaine des sciences de la vie, dans l'industrie chimique, dans l'industrie alimentaire et notamment lors des procédés de bioproduction et dans la surveillance de l'environnement et notamment dans le suivi de la qualité des eaux.

Le pH est généralement mesuré à l'aide d'électrodes de pH en verre. Même si ces dernières ont une bonne sensibilité et une bonne stabilité, elles présentent toutefois un certain nombre d'inconvénients, tels qu'une impédance élevée, une fragilité mécanique, une instabilité dans les solutions très acides et à température élevée, une réponse lente et une vulnérabilité à l'encrassement des membranes. De plus, pour les applications où le volume de la solution dont on souhaite connaître le pH est restreint, les électrodes en verre ne sont pas adaptées en raison des difficultés de miniaturisation.

D'autres types de capteurs pH ont donc été proposés pour résoudre les problèmes techniques des électrodes de pH en verre. Parmi ces derniers, on peut citer les capteurs pH tout solide qui ont l'avantage d'être robustes, facilement intégrables et miniaturisables.

Ces capteurs pH tout solide comprennent une électrode sensible au pH et une électrode de référence. Il convient de préciser que la mesure du pH est obtenue au travers d'une mesure potentiométrique, i.e. la différence de potentiel entre l'électrode sensible au pH et l'électrode de référence. Le potentiel de l'électrode sensible au pH a, en effet, une relation linéaire avec le pH de la solution étudiée selon l'équation de Nernst. Le potentiel de circuit ouvert (en anglais « Open Circuit Potential ») mesuré par rapport à l'électrode de référence est donc utilisé pour mesurer le potentiel de l'électrode et déterminer des valeurs caractéristiques du milieu étudié. Etant donnée la relation linéaire du potentiel de l'électrode en fonction du pH, une courbe de calibration peut être réalisée (avec les paramètres déterminés expérimentalement que sont la pente et l'ordonnée à l'origine).

La relation de Nernst peut s'écrire comme suit :

$$E = E_0 + 2{,}303\,\frac{RT}{F}\log[H_3O^+]$$

Avec E correspondant au potentiel mesuré, Eo à l'offset, R à la constante des gaz parfaits, T à la température, F à la constante de Faraday. A 25°C et avec n = 1, l'équation devient :

$$E = E_0 - 0.05916\,pH$$

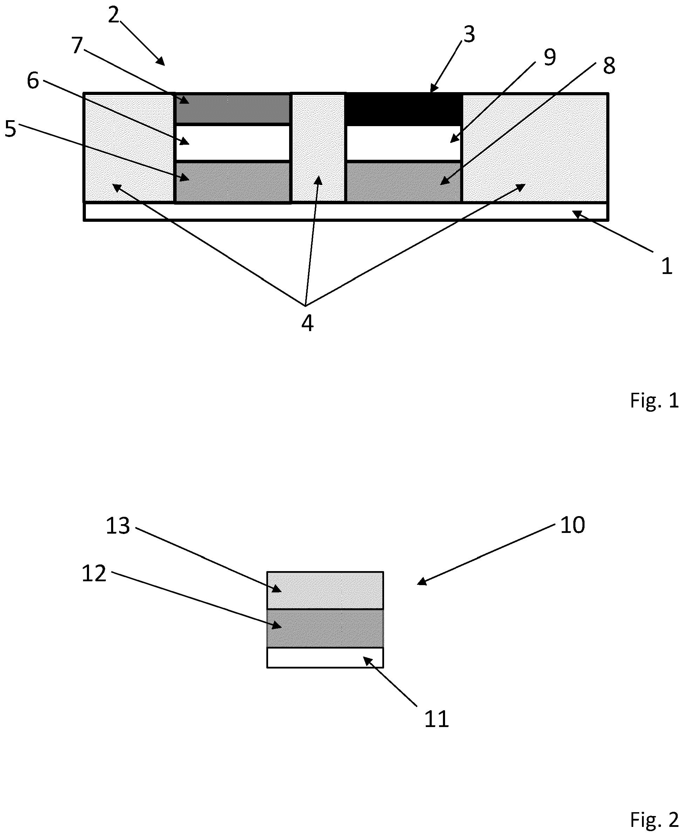

Comme illustré à la Figure 1, les capteurs pH tout solide comprennent un substrat isolant **1** sur lequel sont disposées l'électrode sensible au pH **2** et l'électrode de référence **3**, les deux électrodes étant séparées l'une de l'autre par un matériau isolant **4** comme un polymère isolant ou une résine isolante.

L'électrode sensible au pH **2** est constituée de plusieurs couches avec :

- une couche conductrice **5** en contact avec le substrat isolant **1**, cette couche permet de relier électriquement le capteur à la partie électronique de mesure,

- une couche de transduction **6** disposée sur la couche conductrice **5**, cette couche permet de convertir une activité d'une espèce en solution en un potentiel électrique et
- une couche pH **7** disposée sur la couche de transduction **6**, cette couche est la partie sensible du capteur puisqu'elle est sensible à la concentration des protons (donc du pH) dans une solution.

L'électrode de référence **3** est disposée sur une couche conductrice **8** elle-même en contact avec le substrat isolant **1**, une couche de transduction **9** pouvant éventuellement séparer l'électrode de référence **3** et la couche conductrice **8** i.e. être disposée entre l'électrode de référence **3** et la couche conductrice **8**.

L'élaboration de l'électrode sensible au pH passe donc par la réalisation de différentes étapes afin d'obtenir les différentes couches constitutives de l'électrode, avec un premier dépôt de la couche de transduction et un second dépôt de la couche sensible au pH.

Plusieurs types d'éléments sensibles au pH peuvent être utilisés pour former la couche pH et ont été répertoriés dans la littérature :

- les oxydes de métaux de transition : IrOx, RuOx, WOx, ...,
- les polymères comme, par exemple, la polyaniline (PANI) et le polypyrrole (PPY)), et
- les membranes sélectives ioniques (ou « ISE » en anglais pour « Ion Selective Electrode »), et
- les molécules redox sensibles au pH telles que la quinone et l'anthraquinone.

La PANI existe avec une variété d'états d'oxydation qui sont à la fois sensibles au pH et au potentiel. Afin d'améliorer ses propriétés, l'ajout de nanomatériaux comme des nanotubes de carbone peut se révéler nécessaire **[1]**.

Les ISE présentent le désavantage de nécessiter des étapes d'activation et/ou de conditionnement. Il est à noter que la composition de la solution de conditionnement ainsi que le temps de conditionnement sont très critiques et impactes très fortement les propriétés de l'électrode sensible au pH ainsi élaborée et, de fait, celles du capteur pH, notamment en termes de sensibilité et de stabilité dans le temps **[2]**.

Parmi les matériaux sensibles au pH listés ci-dessus, l'oxyde d'iridium est particulièrement apprécié. En effet, il présente de nombreux avantages parmi lesquels une réponse linéaire, résistant aux environnements sévères et une faible résistivité. De plus, sa facilité de fabrication et sa biocompatibilité en font un excellent candidat pour des applications biomédicales.

Le principe de fonctionnement d'un capteur pH réside sur la formation de groupements hydroxyles insolubles à la surface de l'oxyde métallique en solution. Cette formation permet le déplacement des protons entre les groupements hydroxyles et des échanges avec les protons de la solution. En d'autres termes, les interactions entre la surface et le pH de la solution produisent un changement du potentiel de surface. En évidence, la réaction d'équilibre, causée par la sensibilité au pH d'un capteur à base d'oxyde d'iridium, est dépendante de la réaction d'échange électronique comme représentée par les équations ci-dessous qui impliquent les états d'oxydation 3 et 4 de l'iridium.

Trois possibles mécanismes sont impliqués dans cet équilibre :

$$Ir_2O_3 + 6H^+ + 6e^- \leftrightarrow 2Ir + 3H_2O$$

$$IrO_2 + 4H^+ + 4e^- \leftrightarrow Ir + 2H_2O$$

$$2IrO_2 + 2H^+ + 2e^- \leftrightarrow Ir_2O_3 + H_2O$$

Par ailleurs, la couche pH à base d'oxydes de métaux de transition peut être obtenue par différentes méthodes comme, par exemple, une électrodéposition, un traitement thermique, un procédé sol-gel mais aussi des méthodes de dépôt de type pulvérisation de métal ou d'oxyde métallique **[3]**. Ces dernières sont relativement lourdes à mettre en oeuvre puisque devant être réalisées en salle blanche.

D'autres techniques ont été proposées.

Kampouris *et al*, 2009 mettent en oeuvre une couche de transduction à base de carbone, obtenue par sérigraphie **[4]**. Leur solution comprend néanmoins une étape supplémentaire de fonctionnalisation du carbone par des molécules redox sensibles au pH.

Jovic *et al*, 2018 utilisent un procédé multi-étapes de dépôt par impression jet d'encre **[5]**. Les auteurs ont réalisé 5 couches successives, chacune constituée d'une couche de polymère en tant que transducteur et d'une couche d'oxyde d'iridium. Par ailleurs, leur substrat nécessite également une préparation préalable aux dépôts.

Les électrodes sensibles au pH notamment utiles dans les capteurs de pH tout solide sont réalisées en plusieurs étapes de synthèse et, pour certaines, dans des conditions difficilement industrialisables.

La demande de brevet KR 2022 0003285 A **[6]** propose une composition d'encre sensible au pH et pouvant être mise en oeuvre dans un capteur de pH. Cette composition d'encre sensible au pH comprend le mélange d'un matériau carboné permettant de contrôler la viscosité de la composition et un polymère conducteur, dans lequel des molécules redox sensibles au pH ont été dispersées. A noter que, lorsque cette composition est utilisée dans un capteur de pH, ce dernier ne présente une linéarité que dans la gamme de pH comprise entre 7,5 et 12.

Les inventeurs se sont donc fixé pour but de proposer une électrode sensible au pH pour capteur pH tout solide, susceptible d'être miniaturisée, qui puisse être préparée par un procédé rapide et facile à mettre en oeuvre, sans affecter la sensibilité de l'électrode ainsi préparée.

## EXPOSÉ DE L'INVENTION

La solution proposée par les inventeurs est simple, rapide et peu coûteuse car elle propose de réaliser, en une seule étape et en une seule couche, la partie sensible au pH avec la couche de transduction de l'électrode sensible au pH.

A la date de l'invention, il n'était pas évident que le fait d'associer, dans une même couche, le transducteur électrochimique et les éléments sensibles au pH permettent d'obtenir des électrodes avec une sensibilité au pH comparable à celle obtenue lorsque ce transducteur et ces éléments se trouvent dans deux couches distinctes et préparées indépendamment l'une de l'autre.

Ainsi, la présente invention concerne une électrode sensible au pH **10** comprenant :

- une couche conductrice **12** disposée sur un support isolant **11** et
- une couche sensible au pH **13** disposée sur la couche conductrice **12**, ladite couche sensible au pH comprenant un transducteur électrochimique et des éléments sensibles au pH répartis dans cette couche sensible au pH,

lesdits éléments sensibles au pH étant choisis dans le groupe constitué par les oxydes de métaux de transition et les molécules redox sensibles au pH.

Une schématisation de l'électrode sensible au pH selon l'invention est donnée à la Figure 2.

Dans ce qui suit et ce qui précède, les expressions « sensible au pH », « sensible aux ions H+ » et « sensible aux ions hydrogène » sont équivalentes et utilisables de façon interchangeable.

Comme précédemment expliqué, l'élément essentiel de l'invention est la combinaison, dans une même et unique couche de l'électrode, du transducteur électrochimique et des éléments sensibles au pH répartis dans tout le volume de la couche sensible au pH. En d'autres termes, les éléments sensibles au pH se présentent sous forme dispersée, enrobée et/ou incorporée dans le transducteur électrochimique. On peut également parler d'un transducteur électrochimique fonctionnalisé par les éléments sensibles au pH. Cette organisation est donc clairement différente de l'organisation en deux couches distinctes avec une couche de transduction et une couche sensible au pH ou d'une couche comprenant un transducteur électrochimique, seule la surface de cette couche étant fonctionnalisée par des éléments sensibles au pH.

Dans l'électrode selon l'invention, la couche conductrice est appliquée sur, supportée par un support (ou substrat) isolant i.e. la face inférieure de la couche conductrice est en contact direct avec la surface du support isolant. Par conséquent, aucun élément ou aucune autre couche ne se trouve entre la couche conductrice et le support isolant.

Le support isolant de l'électrode sensible au pH selon l'invention peut être n'importe quel substrat isolant et notamment n'importe quel substrat isolant typiquement utilisé dans les capteurs de pH tout solide. Il peut également être sensiblement plan ou, au contraire, concave ou convexe et d'une forme quelconque telle qu'une forme carrée, rectangulaire, ronde ou ovale.

Avantageusement, le support isolant est en un matériau isolant choisi dans le groupe constitué par le papier, les oxydes non conducteurs, les polymères non conducteurs, les matériaux isolants amorphes, les matériaux isolants cristallins et l'une quelconque de leurs combinaisons.

En particulier, le support isolant de l'électrode sensible au pH selon l'invention est en un matériau isolant choisi dans le groupe constitué par le papier, le dioxyde de silicium ($SiO_2$), l'oxyde d'aluminium ($Al_2O_3$), l'oxyde de magnésium (MgO), un verre contenant généralement des silicates, un verre de silice, une céramique, du diamant, le polysulfure de phénylène, le polyéthylèneimine, le polytétrafluoroéthylène, le polyimide, le polyéthylène, le polypropylène, le polystyrène, le polycarbonate, le polyméthyl méthacrylate, le polysulfone, le polyetherimide, le polyether ether cétone, le parylène N™, le Nuflon™, le silicone, la résine époxyde et l'une quelconque de leurs combinaisons.

Le support isolant mis en oeuvre dans l'invention peut être souple ou rigide. Il peut s'agir d'un substrat typiquement utilisé pour les circuits imprimés (ou « PCB » pour « Printed Circuit Board »). Un tel type de substrat est généralement constitué de couches isolantes en résine époxyde renforcée par une trame de fibres de verre ou de papier.

Plus particulièrement, le support isolant de l'électrode sensible au pH selon l'invention est en un matériau isolant choisi dans le groupe constitué par le papier, une céramique, une résine époxyde éventuellement renforcée par des fibres de verre ou de papier et du polyimide (comme un film de polyimide du type Kapton®).

La couche conductrice de l'électrode sensible au pH selon l'invention permet de relier électriquement cette électrode à la partie électronique de mesure. Elle peut être en tout matériau conducteur de l'électricité et notamment n'importe quel matériau conducteur de l'électricité typiquement utilisé dans les capteurs de pH tout solide.

Avantageusement, la couche conductrice est en un matériau conducteur de l'électricité choisi dans le groupe constitué par les métaux tels que les métaux nobles, les carbones et les polymères ou copolymères conducteurs de l'électricité.

A titre d'exemples de métal utilisable pour la couche conductrice de l'électrode selon l'invention, on peut citer l'or, le cuivre, l'inox, l'argent, le nickel, l'aluminium, le titane, le platine, le palladium, le ruthénium, l'iridium, le molybdène ou un de leurs alliages.

A titre d'exemples de carbone utilisable pour la couche conductrice de l'électrode selon l'invention, on peut citer le graphite, le graphite pyrolytique hautement orienté, le graphène, l'oxyde de graphène, l'oxyde de graphène réduit, le carbone, le carbone activé, le carbone vitreux, le noir de carbone, le carbone de type diamant (ou DLC pour « Diamond Like Carbon ») et le diamant dopé avec du bore (ou BDD pour « Boron Doped Diamant »).

A titre d'exemples de polymère ou copolymère conducteur de l'électricité utilisable pour la couche conductrice de l'électrode selon l'invention, on peut citer la polyaniline (PANI), le poly(3,4-éthylènedioxythiophène) couplé au polystyrène sulfonate) de sodium (PEDOT:PSS) et le polypyrrole

Dans l'électrode sensible au pH selon l'invention, la couche conductrice a typiquement une épaisseur comprise entre 10 nm et 1 mm, notamment entre 100 nm et 100 $\mu$m et, en particulier, entre 1 $\mu$m et 20 $\mu$m.

Dans l'électrode sensible au pH selon l'invention, la couche sensible au pH est appliquée sur, supportée par la couche conductrice i.e. la face inférieure de la couche sensible au pH est en contact direct avec la face supérieure de la couche conductrice. Par conséquent, aucun élément ou aucune autre couche ne se trouve entre la couche conductrice et la couche sensible au pH. A noter que, lorsque l'électrode sensible au pH est utilisée pour connaître le pH d'un milieu liquide, la face supérieure et éventuellement tout ou partie des côtés de la couche sensible au pH de cette électrode est en contact avec ledit milieu liquide. Au contraire, les côtés de la couche conductrice ne doivent pas être en contact avec ce milieu liquide. Pour ce faire, un matériau isolant comme un polymère isolant ou une résine isolante est appliqué sur la couche conductrice que présente l'électrode sensible au pH selon l'invention.

Le transducteur électrochimique présent dans la couche sensible au pH de l'électrode selon l'invention est l'élément de cette dernière dont la fonction est de retranscrire la reconnaissance chimique de la couche sensible au pH en un signal électrique i.e. un signal physique mesurable, sensible et facilement exploitable.

Tout transducteur électrochimique classiquement utilisé dans les capteurs pH tout solide est utilisable dans le cadre de la présente invention. Typiquement, le transducteur électrochimique présent dans la couche sensible au pH est obtenu à partir de carbones, d'encres carbone ou de polymères semi-conducteurs. Lorsque qu'une encre carbone ou un polymère semi-conducteur est utilisé(e) pour préparer le transducteur électrochimique, ce dernier se présente sous forme d'une matrice polymérique dans laquelle les éléments sensibles au pH sont dispersés, enrobés et/ou incorporés dans l'invention.

Le transducteur électrochimique est typiquement choisi parmi les nanomatériaux à base de carbone tel que décrit précédemment pour la couche conductrice de l'électrode comme, par exemple, des nanotubes de carbone monoparoi ou multi-parois, des nanofils de carbone et du graphène.

Par « encre carbone », on entend une encre se présentant sous forme d'une suspension ou dispersion comprenant des charges carbonées, un liant polymérique à partir duquel se forme la matrice polymère du transducteur électrochimique et un solvant du liant polymérique.

Par « charges carbonées », on entend, dans l'invention, des charges à base d'un matériau carboné, typiquement nanométriques et se présentant sous forme de poudre, de grains, de paillettes, de particules, de fils, de fibres creuses, de filaments, de tubes, de rubans, de feuillets, de clusters ou d'un de leurs mélanges. A titre d'exemples plus particuliers de charges carbonées, on peut citer des grains de graphite, des paillettes de graphite, des particules de graphite, des grains de graphite pyrolytique hautement orienté, des feuillets de graphène, des feuillets d'oxyde de graphène, des feuillets d'oxyde de graphène réduit, du fullerène, des paillettes de carbone vitreux, des particules de carbone vitreux ou des nanotubes de carbone mono-paroi ou multi-parois.

Typiquement, le solvant du liant polymérique est un solvant organique, un mélange de solvants organiques, de l'eau ou d'un mélange d'eau et de solvant(s) organique(s). Par « solvant organique », on entend, dans le cadre de la présente invention, un solvant qui appartient à la famille des cétones, des éthers-oxydes, des esters, des alcools, des hydrocarbures notamment aromatiques ou des terpènes.

L'encre carbone utilisable dans le cadre de l'invention peut être préparée, de façon extemporanée, en mélangeant ensemble ses différents constituants. En variante, cette encre peut être une encre accessible dans le commerce. A titre d'exemples d'encres commerciales utilisables dans le cadre de la présente invention, on peut citer l'encre à base de graphite C10903P14 (Gwent Electronic. Materials Ltd, Montypool, Royaume-Uni), l'encre à base de carbone BQ242 (DuPont, Bristol, Royaume-Uni) et l'encre à base de carbone pour impression jet d'encre telles que l'encre JR-700 (Novacentrix, Austin, US). Une encre commerciale plus particulièrement utilisable dans le cadre de la présente invention est l'encre à base de carbone BQ242 (DuPont, Bristol, Royaume-Uni).

Tout polymère semi-conducteur habituellement utilisé comme transducteur électrochimique et notamment comme transducteur électrochimique dans les capteurs de pH tout solide est utilisable dans le cadre de la présente invention. Typiquement, le polymère semi-conducteur à partir duquel le transducteur électrochimique de la couche sensible au pH de l'électrode selon l'invention est obtenu est du PEDOT :PSS ou du poly(3-octylthiophene-2,5-diyl) (ou « POT » de formule $C_{12}H_{18}S$, polymère conjugué semi-conducteur hydrophobe). Un polymère semi-conducteur plus particulièrement utilisable dans le cadre de la présente invention est le POT. En effet, comme illustré dans la partie expérimentale ci-après, ce polymère permet de préparer des électrodes sensibles au pH avec des propriétés reproductibles.

Dans la couche sensible au pH de l'électrode selon l'invention, outre le transducteur électrochimique, on trouve des éléments sensibles au pH choisis dans le groupe constitué par les oxydes de métaux de transition et les molécules redox sensibles au pH.

Les oxydes de métaux de transition dans l'électrode sensible au pH selon l'invention peuvent être n'importe quels oxydes de métaux de transition et notamment n'importe quels oxydes de métaux de transition typiquement utilisés dans les capteurs de pH tout solide. Avantageusement, les oxydes de métaux de transition utilisés dans l'invention sont choisis dans le groupe constitué par les oxydes de titane ($TiO_z$), les oxydes de ruthénium ($RuO_2$), les oxydes de palladium ($PdO_2$), les oxydes de platine ($PtO_2$), les oxydes d'iridium ($IrO_2$), les oxydes de tungstène ($WO_2$) et leurs mélanges. En particulier, les oxydes de métaux de transition utilisés dans l'invention sont choisis dans le groupe constitué par les oxydes de ruthénium ($RuO_2$), les oxydes d'iridium ($IrO_z$) les oxydes de tungstène ($WO_2$) et leurs mélanges. Dans un mode de réalisation particulier, les oxydes de métaux de transition utilisés dans l'invention sont des oxydes de ruthénium ($RuO_2$). Dans un autre mode de réalisation particulier, les oxydes de métaux de transition utilisés dans l'invention sont des oxydes d'iridium ($IrO_2$).

Avantageusement, les oxydes de métaux de transition utilisés dans l'invention se trouvent sous forme nanométrique et/ou micrométrique et notamment sous forme de poudre, de grains, de paillettes, de particules ou d'un de leurs mélanges. Dans un mode de réalisation particulier, les oxydes de transition se présentent sous forme d'une poudre dont la taille des particules est inférieure ou égale à 25 $\mu$m et notamment à 20 $\mu$m.

La mise en oeuvre d'oxydes de métaux de transition dans l'électrode selon la présente invention permet d'obtenir une linéarité dans la gamme de pH comprise entre 3 et 9 et ce, quel que soit le milieu dans lequel l'électrode est placée.

Les molécules redox sensibles au pH dans l'électrode sensible au pH selon l'invention peuvent être n'importe quelles molécules redox sensibles au pH et notamment n'importe quelles molécules redox sensibles au pH typiquement utilisées dans les capteurs de pH tout solide. Avantageusement, les molécules redox sensibles au pH utilisables dans la couche sensible au pH de l'électrode selon l'invention sont choisies dans le groupe constitué par les quinones comme, par exemple, la 1,2-napthaquinone (NQ), les anthraquinones comme, par exemple, la phénanthraquinone (PAQ), les anthracènes comme, par exemple, le 9,10-anthracène et le 9-nitroanthracène, l'azobenzène, la diphénylamine, le bleu de méthylène, le 3-nitrofluoranthène, le 6-nitrochrysène et la thionine.

Dans la couche sensible au pH de l'électrode selon l'invention, le ratio en matières sèches éléments sensibles au pH/transducteur électrochimique est compris entre 1% et 50%, notamment entre 2% et 20% et, en particulier, entre 4% et 8%.

Dans l'électrode sensible au pH selon l'invention, la couche sensible au pH a typiquement une épaisseur comprise entre 1 $\mu$m et 100 $\mu$m, notamment entre 1 $\mu$m et 50 $\mu$m et, en particulier, entre 2 $\mu$m et 30 $\mu$m.

La présente invention concerne également un procédé de préparation d'une électrode sensible au pH telle que précédemment définie. Ce procédé comprend :

-    le dépôt, sur une couche conductrice de l'électricité déposée sur un support isolant, d'une solution ou d'une suspension comprenant un transducteur électrochimique ou un de ses précurseurs et des éléments sensibles au pH choisis dans le groupe constitué par les oxydes de métaux de transition et les molécules redox sensibles au pH puis
-    le séchage de cette solution ou de cette suspension moyennant quoi on obtient une couche sensible au pH comprenant un transducteur électrochimique et dans laquelle des éléments sensibles au pH sont répartis.

Par « précurseur d'un transducteur électrochimique », on entend notamment un polymère semi-conducteur et une encre carbone tels que précédemment définis.

Dans le procédé selon l'invention, la solution ou la dispersion est déposée, sur la couche conductrice, via une technique choisie parmi un dépôt par sérigraphie ; un dépôt par immersion ou trempage, également connu sous la dénomination anglaise « dip coating » ; un dépôt par centrifugation ou dépôt à la tournette, également connu sous la dénomination anglaise « spin coating » ; un dépôt par vaporisation ou pulvérisation manuelle connu sous la dénomination anglaise « spray coating » ; un dépôt par contact utilisant un timbre imbibé par l'encre et connu sous la dénomination anglaise « contact printing » ; un dépôt de type « microgoutte », également connu sous la dénomination anglaise « drop coating » ; un dépôt par impression jet d'encre, également connue sous la dénomination anglaise « inkjet printing » ; un dépôt par typographie ; un dépôt par flexographie et un dépôt par impression offset.

Avantageusement, lors du procédé selon l'invention, la solution ou la dispersion est déposée sur la surface du support par sérigraphie, lorsque le précurseur du transducteur électrochimique est une encre carbone.

En variante, lors du procédé selon l'invention, la solution ou la dispersion est déposée sur la surface du support par drop-coating ou par impression jet d'encre, lorsque le précurseur du transducteur électrochimique est un polymère semi-conducteur.

L'étape de séchage lors du procédé selon l'invention est réalisée à une température comprise entre 20°C et 200°C, notamment entre 40°C et 150°C et, en particulier, entre 60°C et 130°C. Typiquement, l'homme du métier saura définir la durée de l'étape de séchage, sans effort inventif, en fonction de la température, du type de substrat, de l'épaisseur et du type de transducteur électrochimique mis en oeuvre.

Le procédé selon l'invention peut en outre comprendre une étape préalable consistant à préparer une couche conductrice telle que précédemment définie, déposée sur un support isolant tel que précédemment défini. Une telle étape est une étape classique dans la préparation des électrodes et notamment des électrodes de capteurs de pH tout solide.

La présente invention concerne également un capteur pH tout solide comprenant au moins une électrode sensible au pH telle que précédemment définie.

Dans le capteur pH tout solide selon l'invention, l'électrode sensible au pH est associée à une électrode de référence dans une organisation telle que définie à la Figure 1. Ainsi, tout ce qui a été décrit pour la Figure 1 s'applique *mutatis mutandis* au capteur pH tout solide selon l'invention. Toute électrode de référence classiquement utilisée dans les capteurs pH tout solide est utilisable dans le cadre de l'invention.

La présente invention concerne enfin l'utilisation d'une électrode sensible au pH telle que précédemment définie ou d'un capteur de pH tout solide tel que précédemment défini pour mesurer le pH dans un milieu liquide en contact avec ladite électrode ou ledit capteur.

A titre d'exemples d'applications d'une telle utilisation, on peut citer dans le suivi de la dégradation des matériaux, par exemple les bétons, dans la surveillance d'ouvrages de génie civil comme, par exemple, des ponts, des tunnels ou des pipelines, la surveillance de puits de pétrole, dans l'analyse environnementale et notamment pour la qualité de l'eau, dans la surveillance de fonds marins, dans l'analyse physiologique et le diagnostic médical, dans l'industrie chimique, dans l'industrie alimentaire et notamment lors des procédés de bioproduction, dans le contrôle des processus de retraitements des matières nucléaires ou encore dans la surveillance du stockage et de l'entreposage des déchets radioactifs.

D'autres caractéristiques et avantages de la présente invention apparaîtront encore à l'homme du métier à la lecture des exemples ci-après donnés à titre illustratif et non limitatif, en référence aux figures annexées.

## BRÈVE DESCRIPTION DES DESSINS

La Figure 1 déjà présentée correspond à la schématisation d'un capteur pH potentiométrique classique i.e. appartenant à l'état de la technique.

La Figure 2 déjà présentée correspond à la schématisation d'une électrode sensible au pH selon l'invention.

La Figure 3 présente un exemple de courbes expérimentales obtenues par changements successifs de solutions de test de différents pH avec des capteurs sérigraphiés (n=7) versus une référence externe commerciale Ag/AgCl dans une solution sous agitation de PBS 1X avec HCl ou NaOH à 25°C (INV-1).

La Figure 4 présente un graphique représentant les sensibilités au pH mesurée pour différentes configurations de capteurs, le $R^2$ de tous les points étant égal à 0,99 et la plage de pH mesurée étant de 4.09 à 10.09.

La Figure 5 présente une hystérésis en mV d'électrodes fabriquées à partir de différentes formulations versus une référence commerciale Ag/AgCl dans un tampon PBS 1X. L'hystérésis est calculée suite à un changement de pH de l'ordre de +/- 1 unité pH (avec n, le nombre de capteurs).

La Figure 6A présente les temps de réponse de pH 7,37 à 4,97 pour différentes formulations, à 90% et 99%.

La Figure 6B présente les temps de réponse de pH 7,37 à 4,97 pour différentes formulations, à 90%.

La Figure 7A présente les temps de réponse de pH 4,97 à 7,37 pour différentes formulations, à 90% et 99%.

La Figure 7B présente les temps de réponse de pH 4,97 à 7,37 pour différentes formulations, à 90%.

La Figure 8 présente les régressions linéaires de capteurs pH fabriqués à partir d'une encre carbone BQ-242 fonctionnalisée avec des particules d'oxydes d'iridium dans du PBS 1X et différents milieux de cultures cellulaires commerciaux (INV-1).

## EXPOSÉ DÉTAILLÉ DE MODES DE RÉALISATION PARTICULIERS

### I. Préparation des électrodes sensibles au pH.

I.1. Electrodes sensibles au pH conformes à l'invention.

Pour illustrer la présente invention, plusieurs transducteurs électrochimiques ont été testés à savoir : deux encres carbones commerciales (Dupont BQ242 et Novacentrix JR-700, ci-après désignée « NOVA ») et un polymère semi-conducteur, poly(3-octylthiophene 2,5-diyl) (POT).

Pour l'élément sensible au pH, des poudres d'oxydes métalliques commerciales ont été utilisées : poudre d'oxyde d'iridium (Alfa Aesar) et poudre d'oxyde de ruthénium (Alfa Aesar).

Ainsi, les combinaisons des transducteurs électrochimiques et d'oxydes métalliques, telles que présentées dans le Tableau 1 ci-dessous ont été utilisées pour préparer des électrodes sensibles au pH selon l'invention.

|  | Transducteur électrochimique | Oxyde métallique |
|---|---|---|
| INV-1 | BQ242 | $IrO_2$ |
| INV-2 | POT | $IrO_2$ |
| INV-3 | NOVA | $IrO_2$ |
| INV-4 | BQ242 | $RuO_2$ |

Ces électrodes sensibles au pH sont préparées comme suit :

- Etape de formulation et mélange :

    *INV-1 et INV-4* : utilisation de l'encre commerciale BQ242 sans modification et mélange avec de la poudre d'oxydes métalliques (IrOz pour INV-1 et $RuO_2$ pour INV-4), le ratio en matière sèche d'$IrO_2$ (ou de $RuO_2$) par rapport à BQ242 étant de 6% ;
    *INV-3* : utilisation de l'encre commerciale NOVA sans modification et mélange avec de la poudre d'$IrO_2$, le pourcentage en matière sèche d'$IrO_2$ par rapport à NOVA étant de 6% ;
    *INV-2* : solubilisation du POT dans du tetrahydrofurane et mélange avec de la poudre d'$IrO_2$, le ratio en matière sèche d'$IrO_2$ par rapport à POT étant de 6% ;

- Dépôt :

    *INV-1, INV-3 et INV-4* : procédé de sérigraphie
    *INV-2* : procédé de drop-coating

- Séchage : 2-3 heures à 80°C.

I.2. Electrodes sensibles au pH de l'art antérieur.

Afin de mettre en évidence les bonnes propriétés des matériaux selon l'invention, des contre-exemples ont été réalisés et étudiés dans les mêmes conditions :

    CE-1 : $IrO_2$ électrodéposé sur couche de transducteur (encre BQ242)
    CE-2 : $IrO_2$ électrodéposé sur couche conductrice en or (sans utilisation de transducteur).

La procédure pour réaliser CE-1 et CE-2 a été adaptée des références **[7-9]** :

- Formulation de la solution d'électrodéposition : mélange de chlorure d'iridium hydraté (concentration finale de 0,15 g/dL), peroxyde d'hydrogène à 30% en masse (1 mL/dL), acide oxalique dihydraté (0,73 g/dL) et ajout de carbonate de potassium anhydre pour atteindre un pH de 10.5,
- Préparation de la surface recevant l'électrodépôt par un traitement plasma $O_2$,
- Electrodépôt en immergeant l'échantillon dans la solution d'électrodéposition par application de 25 cycles de cyclovoltammétrie de -0.5 à -0.7 V vs Ag/AgCl à 50 mV/s.

## II. Caractérisation et tests.

II.1. Méthodes.

Les capteurs sont immergés dans des solutions (de 20 mL à 2 L) sous agitation, connectés à des potentiostats qui permettent de mesurer les valeurs des potentiels à circuit ouvert pour différentes solutions (changements de solution de pH connus ou ajouts dosés d'acide [$H_2SO_4$ ou HCl] ou de base [NaOH]).

II.2. Résultats.

*Changements successifs de solutions de différents pH*

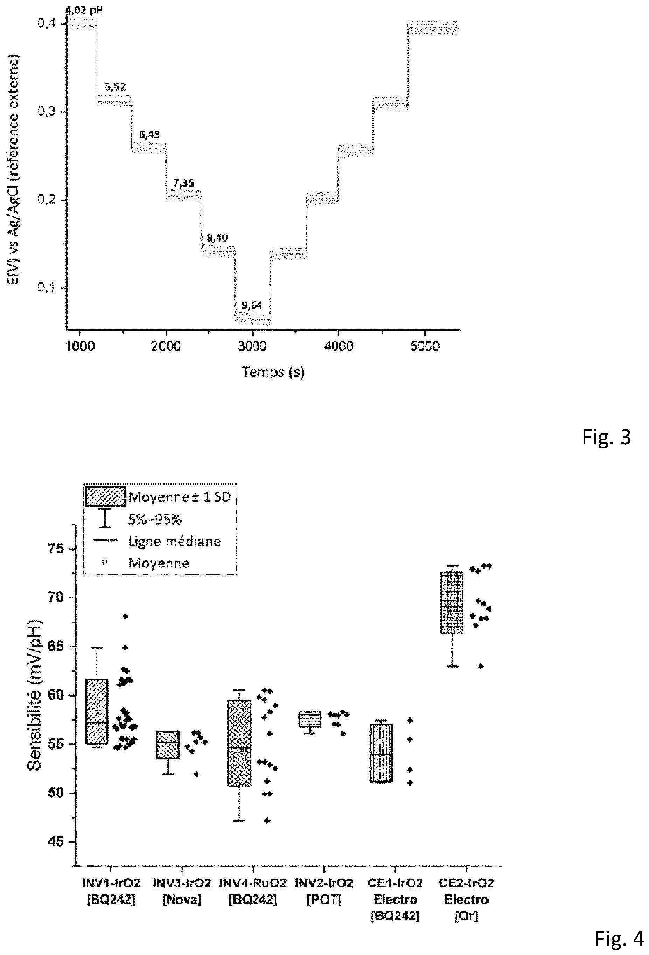

La Figure 3 représente un résultat typique obtenu lors d'une expérience avec des changements de solutions. Ici l'électrode est immergée successivement dans des solutions de pH variables mais connus, le premier palier correspondant à une solution de pH = 7,11, puis 7,34, 4.09, 7,34, 10,09 et ainsi de suite.

*Sensibilité au pH*

Les différentes configurations de capteurs ont été étudiées et les sensibilités au pH exprimées en mV/unité pH représentées à la Figure 4.
Les résultats montrent que l'intégration en une seule couche de l'élément sensible et du transducteur conduit aux meilleures performances des différents capteurs testés en termes de sensibilité. Les valeurs obtenues sont en effet très proches de la valeur théorique de 59 mV/unité pH définie par la théorie (voir Math 2).
Les résultats de INV-2 présentent des réponses d'électrodes sensibles au pH très proches les unes des autres. L'utilisation du POT maintient donc une très bonne reproductibilité de ces électrodes.

*Hystérésis des électrodes*

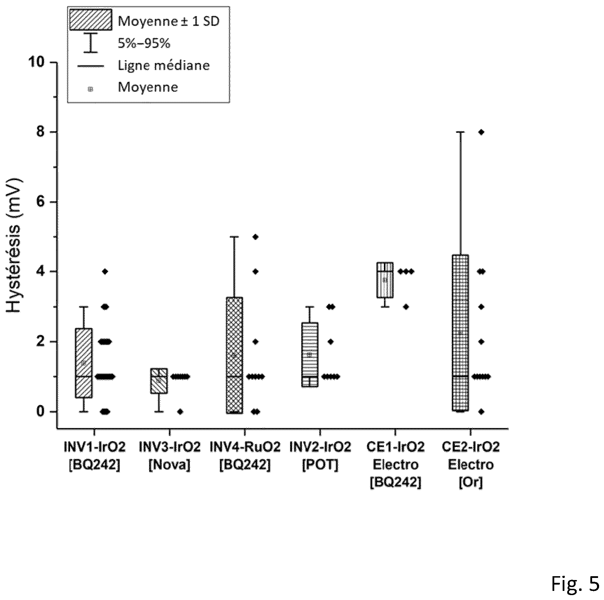

La répétabilité des électrodes sensibles au pH a été caractérisée par le biais de l'hystérésis des électrodes suite à un changement de paliers de +/- 1 unité pH. La Figure 5 illustre les résultats obtenus avec les différentes formulations développées. Il peut être observé que la majorité des électrodes développées présentent une faible hystérésis de l'ordre de 1 mV.

*Temps de réponse des électrodes*

Le temps de réponse des formulations développées pour le suivi du pH a été caractérisé par la mesure des temps de montée et de descente à 90% et à 99%. Ces temps correspondent aux intervalles de temps entre l'instant où la valeur de potentiel mesuré varie suivant un échelon et l'instant où la valeur mesurée dépasse (et demeure au-delà de) 90% (et 99%) de sa différence d'amplitude. L'échelon de pH a été choisi afin de représenter des valeurs proches du minimum et du maximum de la plage de mesure déterminée lors de la spécification du cahier des charges.

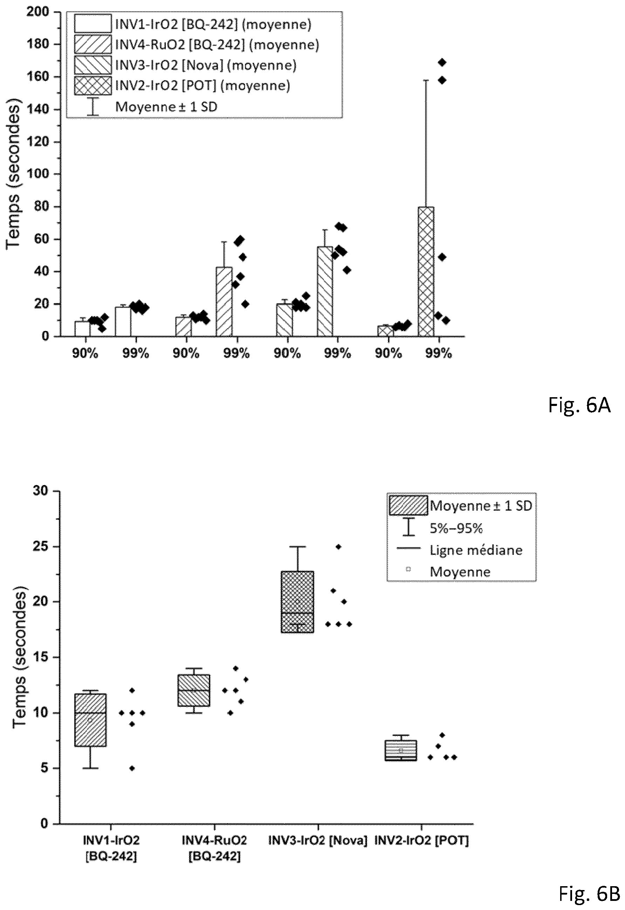

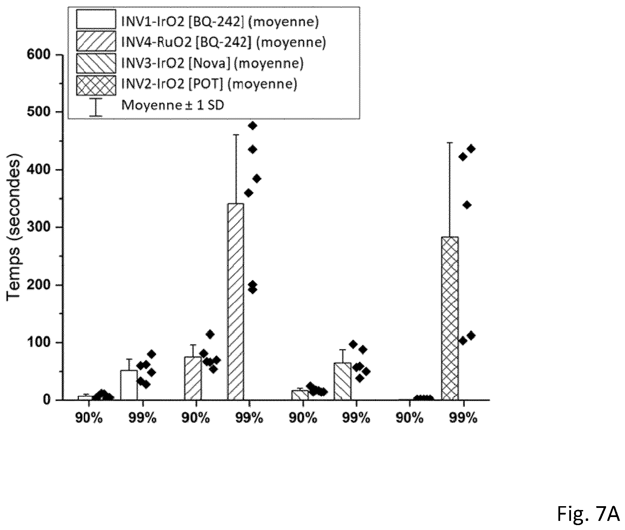

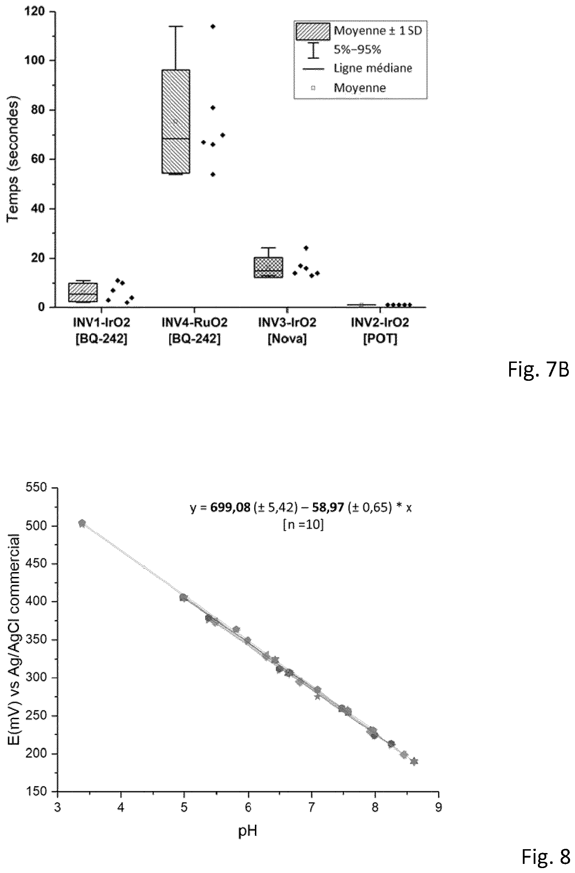

Les Figures 6A et 6B ainsi que les Figures 7A et 7B présentent les résultats mesurés pour différentes formulations développées. La première représente les temps de réponse à 90% et 99% lors d'un passage de pH de 7,37 à 4,97 (Figures 6A et 7A) et la seconde les temps de réponse à 90% lors d'un passage de pH de 4,97 à 7,37 (Figures 6B et 7B).

*Courbes de calibration avec différentes électrodes sensibles au pH*

Le comportement des électrodes sensibles au pH fabriquées à partir d'une encre carbone et des particules d'oxydes d'iridium a été caractérisé en réalisant des paliers de pH (en suivant le même protocole que la phase précédente). Une étude comparative a donc été menée avec 10 capteurs pH similaires dans les milieux de cultures commerciaux suivants :

- Phosphate-Buffered Salin, PBS 1X (ThermoFischer) ;
- RPMI-1640 Medium, avec bicarbonate et sans L-glutamine (SigmaAldrich) ;
- William's Medium E 1X (Gibco) ;
- DMEM, avec 4500 mg/L de glucose et sans L-glutamine et Napyruvate (Millipore);

- Minimum Essential Medium Eagle, avec sels et bicarbonate de sodium et sans L-glutamine (SigmaAldrich).

La Figure 8 présente les courbes de calibrations obtenues avec les différents capteurs dans chaque milieu.
Quel que soit le milieu dans lequel les paliers de pH ont été réalisés, aucune différence significative des courbes de calibrations n'a été mesurée par rapport à celles dans le PBS 1X, montrant ainsi aucune influence de ces milieux de culture sur le comportement des électrodes sensibles au pH développées.

## Références bibliographiques

[1] Kaempgen & Roth, 2006, "Transparent and flexible carbon nanotube/polyaniline pH sensors", Journal of Electroanalytical Chemistry, vol. 586, pages 72-76.
[2] Bakker, 1996, "Détermination of improved selectivity coefficients of polymer membrane ion-selective electrodes by conditioning with a discriminated ion", J. Electrochem. Soc., vol. 143, L83.
[3] Chen et al, 2019, "Patterned iridium oxide film as neural electrode interface: Biocompatibility and improved neurite outgrowth with electrical stimulation", Mater. Sci. Eng.: C, vol. 103, 109865.
[4] Kampouris et al, 2009, "Screen printed electrochemical platforms for pH sensing", Analytical Methods, vol. 1, pages 25-28.
[5] Jovic *et al*, 2018, "Large-scale layer-by-layer inkjet printing of flexible iridium-oxide based pH sensors", J. Electroanal. Chem., vol. 819, pages 384-390.
[6] Demande de brevet KR 2022 0003285 A, aux noms de Univ Kyonggi Ind & Acad Coop Found, Industry Univ Coop Foundation of Seokyeong Univ, publiée le 10/01/2022.
[7] Uria et al, 2016, "Miniaturized métal oxide pH sensors for bacteria détection", Talanta, vol. 147, pages 364-369.
[8] Elsen et al, 2009, "Effects of Electrodeposition Conditions and Protocol on the Properties of Iridium Oxide pH Sensor Electrodes", J. Electrochem. Soc., vol. 156, F1.
[9] Mailley et al, 2002, "Electrochemical and structural characterizations of electrodeposited iridium oxide thin-film electrodes applied to neurostimulating electrical signal", Mater. Sci. Eng. C, vol. 21, pages 167-175.

## Revendications

1. Electrode sensible aux pH (10) comprenant :

   - une couche conductrice (12) disposée sur un support isolant (11) et
   - une couche sensible au pH (13) disposée sur la couche conductrice (12), ladite couche sensible au pH comprenant un transducteur électrochimique et des éléments sensibles au pH répartis dans cette couche sensible au pH,

   lesdits éléments sensibles au pH étant des oxydes de métaux de transition.

2. Electrode sensible aux pH selon la revendication 1, **caractérisée en ce que** ledit support isolant est en un matériau isolant choisi dans le groupe constitué par le papier, une céramique, une résine époxyde éventuellement renforcée par des fibres de verre ou de papier et du polyimide.

3. Electrode sensible aux pH selon la revendication 1 ou 2, **caractérisée en ce que** ladite couche conductrice est en un matériau conducteur de l'électricité choisi dans le groupe constitué par les métaux tels que les métaux nobles, les carbones et les polymères ou copolymères conducteurs de l'électricité.

4. Electrode selon l'une quelconque des revendications 1 à 3, **caractérisé en ce que** ledit transducteur est obtenu à partir de carbones, d'encres carbone ou de polymères semi-conducteurs.

5. Electrode selon la revendication 4, **caractérisée en ce que** ledit polymère semi-conducteur est du poly(3-octylthiophene-2,5-diyl).

6. Electrode selon l'une quelconque des revendications 1 à 5, **caractérisé en ce que** lesdits oxydes de métaux de transition sont choisis dans le groupe constitué par les oxydes de ruthénium ($RuO_2$), les oxydes d'iridium ($IrO_2$) les oxydes de tungstène ($WO_2$) et leurs mélanges.

**7.** Electrode selon l'une quelconque des revendications 1 à 6, **caractérisé en ce que**, dans ladite couche sensible au pH, le ratio en matières sèches éléments sensibles au pH/transducteur électrochimique est compris entre 1% et 50%, notamment entre 2% et 20% et, en particulier, entre 4% et 8%.

**8.** Procédé de préparation d'une électrode sensible au pH selon l'une quelconque des revendications 1 à 7, ledit procédé comprenant :

- le dépôt, sur une couche conductrice de l'électricité déposée sur un support isolant, d'une solution ou d'une suspension comprenant un transducteur électrochimique ou un de ses précurseurs et des éléments sensibles au pH du type oxydes de métaux de transition puis
- le séchage de ladite solution ou de ladite suspension moyennant quoi on obtient une couche sensible au pH comprenant un transducteur électrochimique et dans laquelle des éléments sensibles au pH sont répartis.

**9.** Capteur pH tout solide comprenant au moins une électrode sensible au pH selon l'une quelconque des revendications 1 à 7.

**10.** Utilisation d'une électrode sensible au pH selon l'une quelconque des revendications 1 à 7 ou d'un capteur pH tout solide selon la revendication 9, pour mesurer le pH dans un milieu liquide en contact avec ladite électrode ou ledit capteur.

Fig. 1

Fig. 2

Fig. 3

Fig. 4

Fig. 5

Fig. 6A

Fig. 6B

Fig. 7A

Fig. 7B

$$y = \mathbf{699,08}\,(\pm 5,42) - \mathbf{58,97}\,(\pm 0,65) * x$$
$$[n = 10]$$

Fig. 8

Europäisches
Patentamt

European
Patent Office

Office européen
des brevets

# RAPPORT DE RECHERCHE EUROPEENNE

Numéro de la demande

EP 23 21 8755

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/319133 A1 (KIM SHINSEON [KR]) 8 octobre 2020 (2020-10-08) * le document en entier * ----- | 1-10 | INV. G01N27/30 G01N27/327 G01N27/416 |
| A | KR 2022 0003285 A (UNIV KYONGGI IND & ACAD COOP FOUND [KR] ET AL.) 10 janvier 2022 (2022-01-10) * le document en entier * ----- | 1-10 | |
| A | US 2017/205372 A1 (JOHNSON CHRISTOPHER [US] ET AL) 20 juillet 2017 (2017-07-20) * abrégé * * alinéa [0354] * ----- | 1-10 | |
| A | US 2019/293529 A1 (RAJAN NITIN K [US] ET AL) 26 septembre 2019 (2019-09-26) * abrégé * * alinéas [0200], [0218] * ----- | 1-10 | |

DOMAINES TECHNIQUES
RECHERCHES (IPC)

G01N

Le présent rapport a été établi pour toutes les revendications

| Lieu de la recherche | Date d'achèvement de la recherche | Examinateur |
|---|---|---|
| Munich | 7 janvier 2024 | Ruchaud, Nicolas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 21 8755

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07−01−2024

| Document brevet cité au rapport de recherche | Date de publication | Membre(s) de la famille de brevet(s) | | Date de publication |
|---|---|---|---|---|
| US 2020319133 A1 | 08−10−2020 | KR | 101780668 B1 | 21−09−2017 |
| | | US | 2020319133 A1 | 08−10−2020 |
| | | WO | 2017204411 A1 | 30−11−2017 |
| KR 20220003285 A | 10−01−2022 | AUCUN | | |
| US 2017205372 A1 | 20−07−2017 | EP | 3320107 A1 | 16−05−2018 |
| | | EP | 3708673 A1 | 16−09−2020 |
| | | US | 2017008825 A1 | 12−01−2017 |
| | | US | 2017205372 A1 | 20−07−2017 |
| | | US | 2017226037 A1 | 10−08−2017 |
| | | WO | 2017005587 A1 | 12−01−2017 |
| US 2019293529 A1 | 26−09−2019 | CA | 3085018 A1 | 13−06−2019 |
| | | CN | 111712709 A | 25−09−2020 |
| | | EP | 3695214 A1 | 19−08−2020 |
| | | JP | 7254077 B2 | 07−04−2023 |
| | | JP | 2021505851 A | 18−02−2021 |
| | | JP | 2023082085 A | 13−06−2023 |
| | | US | 2019293529 A1 | 26−09−2019 |
| | | WO | 2019113226 A1 | 13−06−2019 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20220003285 A

**Littérature non-brevet citée dans la description**

- **KAEMPGEN ; ROTH.** Transparent and flexible carbon nanotube/polyaniline pH sensors. *Journal of Electroanalytical Chemistry,* 2006, vol. 586, 72-76
- **BAKKER.** Détermination of improved selectivity coefficients of polymer membrane ion-selective electrodes by conditioning with a discriminated ion. *J. Electrochem. Soc.,* 1996, vol. 143, L83
- **CHEN et al.** Patterned iridium oxide film as neural electrode interface: Biocompatibility and improved neurite outgrowth with electrical stimulation. *Mater. Sci. Eng.: C,* 2019, vol. 103, 109865
- **KAMPOURIS et al.** Screen printed electrochemical platforms for pH sensing. *Analytical Methods,* 2009, vol. 1, 25-28
- Large-scale layer-by-layer inkjet printing of flexible iridium-oxide based pH sensors. *J. Electroanal. Chem,* 2018, vol. 819, 384-390
- **URIA et al.** Miniaturized métal oxide pH sensors for bacteria détection. *Talanta,* 2016, vol. 147, 364-369
- **ELSEN et al.** Effects of Electrodeposition Conditions and Protocol on the Properties of Iridium Oxide pH Sensor Electrodes. *J. Electrochem. Soc.,* 2009, vol. 156, F1
- **MAILLEY et al.** Electrochemical and structural characterizations of electrodeposited iridium oxide thin-film electrodes applied to neurostimulating electrical signal. *Mater. Sci. Eng. C,* 2002, vol. 21, 167-175